# EUROPEAN PATENT SPECIFICATION

(11) **EP 1 073 340 B1**
(45) Date of publication and mention of the grant of the patent: **14.09.2005**
(21) Application number: 99925520.1
(22) Date of filing: 19.04.1999
(51) Int. Cl.: A23C 19/076

(54) **A METHOD FOR THE PRODUCTION OF SWEET FRESH CHEESE**
VERFAHREN ZUR HERSTELLUNG VON SUESSEM FRISCHKAESE
PROCEDE DE PRODUCTION DE FROMAGE FRAIS DOUX

(30) Priority: 20.04.1998 SE 9801362
(43) Date of publication of application: 07.02.2001
(73) Proprietor: Tetra Laval Holdings & Finance S.A., 1009 Pully (CH)
(72) Inventor: ALTAMIRANO, José, V., E-28005 Madrid (ES); BREDAHL, Börje, NL-8925 GW Leeuwarden (NL); LEUFSTEDT, Göran, S-226 39 Lund (SE); NILSSON, Lars-Ebbe, S-237 36 Bjärred (SE)
(74) Representative: Forsberg, Lars-Ake
(86) International application number: PCT/SE1999/000620
(87) International publication number: WO 1999/053773

(56) References cited:
- WO-A1-93/20704
- US-A- 4 716 045

## Description

### TECHNICAL FIELD

The present invention relates to a method for the production of sweet fresh cheese, according to the preamble of claim 1.

### BACKGROUND ART

Fresh cheese may be defined as a product made from milk or cream which is caused to coagulate with the aid of rennet or an acid culture and which is ready for consumption immediately after production. In most countries and cultures, there is some form of fresh cheese. The types are often regional in nature and have long traditions, but with increased globalisation and tourism, the various regional types of fresh cheese have begun to spread outside their regions of original. Of the more well-known types which are produced with the aid of an acid culture, mention might be made of curd or cottage cheese and Cream Cheese which may be deemed to be acid-coagulated fresh cheeses, with a pH of <5.2. Those cheeses which coagulate only by the addition of rennet are called sweet-coagulated fresh cheeses and have a pH of approx. 6.7. One example of this variety is Queso Fresco. These three types of fresh cheese constitute per se different fundamental types of which there are innumerable variations. The basic types and their production methods will be described below.

For production of fresh cheese on an industrial scale, use has long been made of centrifuges as far as acid-coagulated cheeses are concerned. The milk raw material (skimmed milk in the production of curd and cream in the production of Cream Cheese) is pretreated, whereafter a fermentation is set in train in that an acid culture is added to the raw material. After heat treatment, the whey is separated from the cheese mass by centrifuging. Special centrifuges have been developed, on the one hand for curd production and on the other hand for the production of Cream Cheese. It has not been possible to employ the same type of centrifuge for these two products, because of their different densities. The whey which leaves the process is sour or acidic and contains certain proteins dissolved in the whey. In many countries, acidic whey has a lower commercial value than sweet whey and is occasionally viewed as an environmental problem. By so-called thermalization of the fermented milk, it is possible to obtain a better separation of proteins from the whey and thereby a higher production yield. After centrifuging, the product is normally cooled and packed in consumer packages. To be able to obtain extended shelf-life of the product, so-called hot filling has also been applied.

Recently, ultrafiltration has, in many cases, superseded centrifuging for concentration and the separation of the whey or permeate. By a higher retention of whey proteins, the production yield has been increased in this process. However, the problem involving the acidic whey/ permeate still remains.

A method of producing an acidified fresh cheese using ultrafitration is disclosed in WO-A9 320 704.

A method of producing a sweet fresh cheese using ultrafitration is disclosed in US 4,716,045.

For the third major type of fresh cheese, Queso Fresco, the milk raw material has, in earlier production, been pretreated and rennet added. After coagulation and separation of the whey, a sweet fresh cheese has been obtained which has a short shelf-life as a result. A sweet whey is obtained which has a greater commercial value than the acidic or sour whey.

In the production of Queso Fresco on a large scale, ultrafiltration has, in some cases, been employed after the pretreatment for concentrating the milk raw material. The rennet was added to the concentrate just before packing and the product has coagulated in the package. In order thereafter to be able to deactivate the rennet enzyme, which would otherwise give rise to flavour changes, the entire package must be heat treated. At the same time, heat treatment of the product is obtained, which extends its shelf-life. This heat treatment of the package has placed stringent demands on package type, with the result that this is relatively expensive. At the same time, the process of carrying out the heat treatment (which, for example, may take place in a water bath) is circumstantial and expensive.

### OBJECTS OF THE INVENTION

One object of the present invention is to realise a production method for sweet fresh cheese.

A further object of the present invention is to obtain, using this method, a sweet whey / permeate.

In addition, the method according to the present invention obviates the need of employing the expensive and circumstantial process of deactivating the rennet enzyme by heat treatment of the packages in the production of cheese of the Queso Fresco type. It is then possible to employ other types of packages for the finished product. As a result of improved hygiene, a fresh cheese will be obtained which displays long shelf-life in cold storage, without the packages needing to be heat treated.

### SOLUTION

These and other objects have been attained according to the characterizing part of claim 1.

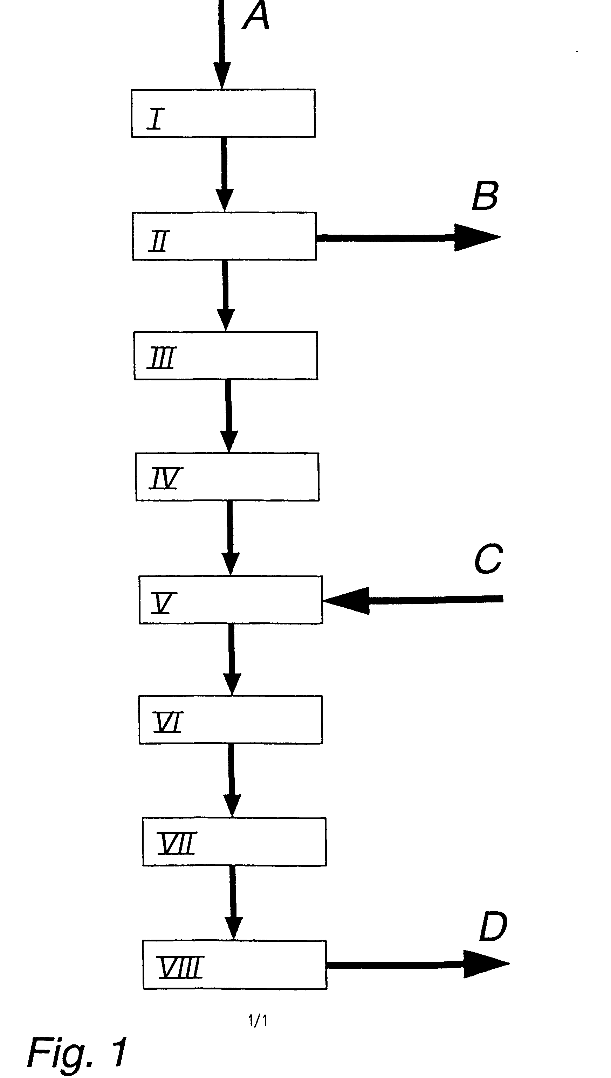

### BRIEF DESCRIPTION OF THE ACCOMPANYING DRAWING

The present invention will now be described in greater detail hereinbelow, with reference to the accompanying Drawing, which shows a block diagram illustrating the process.

In the block diagram, the different process stages are designated using roman numerals, while on those occasions when something is added to or removed from the process, there is a letter designation.

### DESCRIPTION OF PREFERRED EMBODIMENT

A milk raw material A, i.e. raw milk, enters the process direct from the producer. In the first process stage I, the milk raw material is pretreated. The pretreatment may vary from one dairy to another and from one country to another, but normally includes a heat treatment at 70-150°C for a period of time which may vary from a few seconds up to 15 minutes, depending upon temperature and the desired treatment. The pretreatment further includes separation of the milk raw material into a skimmed milk phase and a cream phase. Depending upon the type of fresh cheese which is to be produced, standardisation to the desired fat content may thereafter take place. Alternatively, skimmed milk or cream is employed without any prior standardisation. The pretreatment may also include microfiltration or bactrofuging, as well as homogenization.

In process stage II, the milk or cream is concentrated by membrane filtration, such as ultrafiltration, where it is caused to pass through a filter. In the retentate, the greater part of the proteins are concentrated, which assists in improving the yield of the process. The permeate B which passes through the filter is sweet permeate, since no addition of acid cultures has taken place.

For this sweet by-product, there are several different outlet possibilities and it commands a higher commercial value than the sour or acidic whey or permeate.

In the next process stage III, the milk concentrate is heat treated by pasteurisation or sterilisation at 70-150°C for a period of time which may vary from a few seconds to 15 minutes, depending upon temperature and the desired treatment. Alternatively, this process stage may also include homogenisation.

Process stage IV relates to cooling of the product to a suitable temperature, between 5 and 80°C. The temperature level depends upon what type of fresh cheese it is the intention to produce. For Queso Fresco, it is normally 50-65°C.

In process stage V, C is added which consists of a coagulation agent, saline solution, and possibly other flavour additives. Pennet is the coagulation agent. All additives are mixed into the concentrated milk which keeps the predetermined temperature to which it had been cooled in process stage IV.

Process stage VI comprises packing the concentrate mixture in consumer packages. The packing operation should also take place at the temperature which the concentrate received in the cooling process stage IV, i.e. 50-65°C in Queso Fresco production. The packing method and the packages may be hygienic or alternatively aseptic. For example, the concentrate mixture may be packed in that type of package which is employed for liquid foods and which is manufactured from a laminate with a core of paper or paperboard to which are laminated different layers of thermoplastic and barrier layers. These packages are normally parallelepipedic in form and, by means of a suitably adapted opening arrangement, a large area of the package may be opened for ease of access to the contents.

The subsequent process stage VII consists of a stay period which varies depending upon fresh cheese type. For the Queso Fresco type, the packages are kept in a space at constant temperature corresponding to the packaging temperature, i.e. 50-65±1°C. During the first 30 minutes of the stay period, coagulation takes place of the concentrate mixture in the package, as a result of the addition of rennet in process stage V. During the remainder of the stay period, up to approx. 3 hours, the rennet enzyme is deactivated during the continued warm stay time. If the rennet enzyme is not deactivated, it may give rise to flavour changes during the storage of the product. In this production method, a sweet fresh cheese with a pH of approx. 6.7 is obtained.

After the stay period, the packages are cooled and cold stored (process stage VIII). From cold storage, the products D are transported while maintaining the refrigeration out to the retail point of sale and to the consumers, or alternatively at room temperature for aseptic products.

As will have been apparent from the foregoing description, the present invention realises a cost-saving method which is suitable for all sweet fresh cheese types and which may be reduced into practice using the same equipment. The concentration with ultrafiltration also increases the process yield. The method also eliminates the need for the expensive and circumstantial process of deactivating the rennet enzyme and packing the pasteurised product in the production of Queso Fresco.

## Claims

1. A method for the production sweet of fresh cheese, comprising the steps of pretreating a milk raw material, concentrating the milk raw material by membrane filtration and heat treating of the milk concentrate, and also that to the milk concentrate is added a rennet enzyme and flavour additives to create a sweet fresh cheese, whereafter the sweet fresh cheese is packed directly in consumer packages **characterized in that** the sweet fresh cheese is packed at a temperature of 50-65°C and that is kept at this temperature for approx. 3 hours, at which the sweet fresh cheese coagulates during the first half hour and that during the rest of the time a deactivation of the rennet enzyme takes place.

## Patentansprüche

1. Verfahren zur Herstellung von süßem Frischkäse, umfassend die Schritte Vorbehandeln eines Milchrohmaterials, Aufkonzentrieren des Milchrohmaterials durch Membranfiltration und Wärmebehandeln des Milchkonzentrats, und dass ferner das Milchkonzentrat mit einem Labenzym und Geschmackszusatzstoffen versetzt wird, so dass ein süßer Frischkäse hergestellt wird, wonach der süße Frischkäse direkt in Konsumentenverpackungen verpackt wird, **dadurch gekennzeichnet, dass** der süße Frischkäse bei einer Temperatur von 50-65°C verpackt und bei dieser Temperatur für etwa 3 Stunden gehalten wird, wobei der süße Frischkäse während der ersten halben Stunde gerinnt und während der restlichen Zeit eine Desaktivierung des Labenzyms erfolgt.

## Revendications

1. Méthode de production de fromage frais doux, comprenant les étapes de prétraitement d'une matière première de lait, de concentration de la matière première de lait par filtration sur membrane et de traitement thermique du concentré de lait, et également que l'on ajoute au concentré de lait une enzyme de présure et des additifs aromatisants pour générer un fromage frais doux, après quoi le fromage frais doux est emballé directement dans des emballages de vente, **caractérisée en ce que** le fromage frais doux est emballé à une température de 50-65°C et qu'il est maintenu à cette température pendant environ 3 heures, ce par quoi le fromage frais doux coagule pendant la première demi-heure et une désactivation de l'enzyme de présure a lieu le reste du temps.
